# EUROPEAN PATENT SPECIFICATION

(11) **EP 1 152 347 B1**
(45) Date of publication and mention of the grant of the patent: **21.11.2007**
(21) Application number: 01109246.7
(22) Date of filing: 14.04.2001
(51) Int. Cl.: G06F 17/22

(54) **Method to convert UNICODE text to mixed codepages**
Methode zur Konvertierung von UNICODE Text in gemischte Codepages
Méthode pour convertir du texte UNICODE en codepage mixtes

(30) Priority: 26.04.2000 EP 00108884
(43) Date of publication of application: 07.11.2001
(73) Proprietor: International Business Machines Corporation, Armonk, NY 10504 (US)
(72) Inventor: Bauer, Joachim, Dr., 71032 Böblingen (DE)
(74) Representative: Teufel, Fritz

(56) References cited:
- EP-A- 0 989 499
- WO-A-97/10556
- "Memory-Optimized Font Data Management in the Virtual Memory System" IBM TECHNICAL DISCLOSURE BULLETIN, IBM CORP. NEW YORK, US, vol. 39, no. 10, 1 October 1996 (1996-10-01), pages 1-2, XP002179881

## Description

### 1. BACKGROUND OF THE INVENTION

### 1.1 FIELD OF THE INVENTION

The present invention relates to method and system for converting between character codes associated to computer-readable characters. In particular, it relates to such method and system for converting a source string being encoded according to unicode standard into a target string which is to be encoded according to mixed code pages.

### 1.3 OBJECTS OF THE INVENTION

Computers and other electronic devices typically use text to interact with users. The text is usually displayed on a monitor or some other type of display device. Because the text must be represented in digital form inside the computer or other electronic device, a character set encoding must be used. Generally speaking, a character set encoding operates to encode each character of the character set with a unique digital representation. The characters (which are encoded) correspond to letters, numbers and various text symbols. They are assigned numeric codes for use by computers or other electronic devices. The most popular character set for use with computers and other electronic devices is the American Standard Code for Information Exchange (ASCII). ASCII uses 7-bit sequences for its encodings. In other countries, different character sets are used. In Europe, the dominant character encoding standards are the ISO 8859-X family, especially ISO 8859-1 (called "Latin-1") developed by the International Standards Organization (ISO). In Japan, the dominant character encoding standard is JIS X0208 where JIS refers to the Japanese Information Standard and was developed by Japan Standards Association (JSA). Examples of other existing character sets include Mac^{™} OS Standard Roman encoding (by Apple Computer, Inc.) Shift-JIS (Japan), Big5(Taiwan), and many more.

The above mentioned character sets are stored in a so-called codepage which is a kind of table disclosing the coding of each of the characters comprised of said character set. Thus, for each character its associated numerical code is given such that a unique mapping exists between them two. Most code pages associate a numerical code of one byte length for each character. But there are code pages having a numerical code of more than that, for example of two byte or three bytes length. Code pages comprising characters having all the same code length are called simple code pages.

In order to better accommodate the complexity of the individual language-specific national requirements so-called mixed code pages exist as well. A mixed codepage comprises up at least two sub-codepages the coding of which may differ in length. Said sub-codepages are called code sets as well. They are numbered from 0 up to 3. The mixed Japanese codepage IBM-33722, for example, comprises the code sets IBM-895 (1 byte, codeset 0), IBM-952 (2 bytes, codeset 1), codepage IBM-896 (escape 8E+ 1 byte, codeset 2) and IBM-953 (escape 8F + 2 bytes, codeset 3).

With the steadily increasing process of globalization of business and networks and with the further increasing influence of the Internet which connects between virtually all nations all over the world any conversion of data between computers using different kinds of code pages must be as fast as possible and - optionally as simple as possible.

In order to simplify said code conversions the so-called unicode standard has been developed and is meanwhile internationally recognized. Unicode offers a single scheme for representing all existing code sets. The design of the unicode encoding scheme is independent of the design of basic text processing algorithms, with the exeption of directionality. Unicode implementations are assumed to contain suitable text processing and/or rendering algorithms. Any character encoded according to the unicode standard is represented by a 2-byte long numerical code.

The problem is now to find a very efficient way to convert from unicode standard to the above mentioned mixed code pages, i.e. a source string is given represented by the unicode standard and is desired to be converted very simply and very quickly into a code system which comprises a plurality of code pages, for example a plurality of four as it was mentioned above.

A prior art converting method from unicode to multiple code pages is disclosed in US-patent number 5,793,381. Said code conversion system maps a single source character or a sequence of characters to either a single target character or a sequence of target characters by looking up in a mapping table the location of the associated target character. When reading a source character said mapping table is accessed for determining which of the sub-codepages shall be used for code conversion. A particular sub-codepage is found which is continued to be used for code conversion until a source character is found in the input character string which can not be converted with said sub-codepage. In this case said auxiliary mapping table is re-accessed in order to find the right sub-codepage. Additionally, said prior art code conversion system includes a fallback handling operating with the mapping table to identify one or more characters in the target encoding that are able to be used as a fallback mapping for the text element in cases where the look-up handler has been unable to identify one or more characters in the target encoding for the text element.

This prior art approach, however, uses an additional lookup table that makes it slower and more complicated than necessary.

### 1.3 OBJECTIVE OF THE INVENTION

It is thus an object of the present invention to provide a method and system for code conversion from unicode text to mixed code pages which can be run with a better performance.

### 2. SUMMARY AND ADVANTAGES OF THE INVENTION

These objects of the invention are achieved by the features stated in enclosed independent claims. Further advantageous arrangements and embodiments of the invention are set forth in the respective subclaims.

Briefly summarizing the basic concepts of the present invention it is proposed to associate a predetermined priority with each sub-codepage, and converting the characters strictly according to said priority sequence without using a mapping table in order to find out in which of the plurality of sub-codepages the target character and its encoding is stored. Advantageously, the sub-codepage which comprises the most frequently used characters is associated with the highest priority and that one with the most rarely used characters is associated with the lowest priority. Thus, in a case of four sub-codepages a priority sequence between said sub-codepages can be established. Each priority is a measure for the probability to find a particular character in the respective sub-codepage.

Beside this fundamental approach it is further proposed for the case when a character has not been found in a particular sub-codepage to access the sub-codepage having the highest priority which has not yet been accessed for said character.

Applying the above mentioned inventional measures yields the following advantages:
First, the performance is remarkably increased compared to the prior art conversion method mentioned above because there is no separate mapping table which has to be accessed each time a character is not found in the currently used sub-codepage.
Second, said auxiliary mapping table need not to be created at all. This saves a lot of work.
Third, the priority sequence given to the plurality of sub-codepages can be established such that country-specific knowledge about the language is exploited. Thus, the inventional conversion method is easily adaptable to the particularities imposed by a particular, country-specific codepage system.

Dependent on a respective individual case the above mentioned priority sequence can be alternatively dynamically changed from a standard to an individual setting before running the code conversion in order to adapt the inventional code conversion method to specific requirements imposed by a specific text to be converted when in advance it is known that the text is not representative for the average. The new priority sequence might be for example given in the header of the file to be converted.

A further remarkable advantage of the inventional method is that it offers a concept which is open to exploit the specific advantage of modern computer systems that hardware instructions may be used which process a plurality of characters instead of only one at a time. Such modern hardware instructions need a linear table for looking up the target characters without an additional checking access to any kind of mapping table.

The present invention can be advantageously used with the Internet when any code conversion is required. Further, the inventional tool may be incorporated in a data base application when some contents of said data base is likely to be converted from a unicode text to mixed code pages.

When the inventional method is applied in a case in which the probability to find a particular character in one of the plurality of sub-codepages is the same for all sub-codepages a statistical mean value of only 2 additional access is required when 4 sub-codepages exist. This value reduces to 1.5 for 3 sub-codepages and reduces to 1 for the case with two sub-codepages. In a case for Japanese EUC-tables in which 70% of all characters are found in codeset 1, 30% are found in codeset 0 and less than 1% are found in the remaining code sets 2 and 3, said statistical mean value is a little more than 1.

Further, the present invention can advantageously be incorporated at least partly in a hardware implementation directly burnt-in into a hardware chip. Such a chip means then comprises hardware circuits implementing and reflecting at least parts of the steps of the inventional code conversion method. Considering the steadily growing diversity of telecommunication devices and their steadily increasing function range including more and more technical features such a chip can then be used in a large variety of devices. In view of devices available today such a chip can be advantageously used in any device which forms part of any international communication. For example, Routers in any kind of network, e.g., the Internet, Set-Top boxes for TV or radio receiving devices, particularly digital TV or radio, mobile phones, any kind of hand-held computing and/or telecommunication device or any other device having an imput interface for processing any foreign-language data.

### 3. BRIEF DESCRIPTION OF THE DRAWINGS

The present invention is illustrated by way of example and is not limited by the shape of the figures of the accompanying drawings in which:
Fig. 1 is a schematic logical representation showing the basic elements of the inventional method,
Fig. 2 is a rough illustration in an arbitrarily chosen example showing for each of a plurality of 230 source characters in which of a plurality of 4 sub-codepages each character may be found,
Fig. 3 is a logical scheme showing the sequence of codeset accesses when a method is applied according to a preferred embodiment of the present invention during code conversion.

### 4. DESCRIPTION OF THE PREFERRED EMBODIMENT

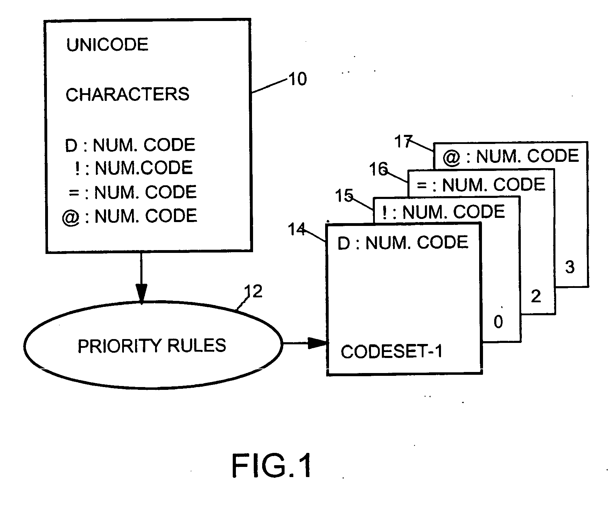

With general reference to the figures and with special reference now to **fig. 1** in box 10 the total of unicode characters is symbolically represented which are subjected to the inventional conversion method.

According to a preferred embodiment of said inventional method some priority rules 12 are established which establish some well-defined priority sequence between the plurality of sub-codepages used. The term 'codeset n', n being an integer number- is sometimes used in here which basically means the same as the term 'sub-codepage n'. In the case depicted in fig. 1 four sub-codepages denoted as codeset 1, 14, codeset 0, 15, codeset 2, 16 and codeset 3, 17 are used. In box 10 four exemplarily selected characters are depicted the encoding of which is located each in a different separate sub-codepage, as reveals from the right side of fig. 1.

As reveals from the drawing in each of said tables 10, 14, 15, 16, 17 the numerical code is stored for each character.

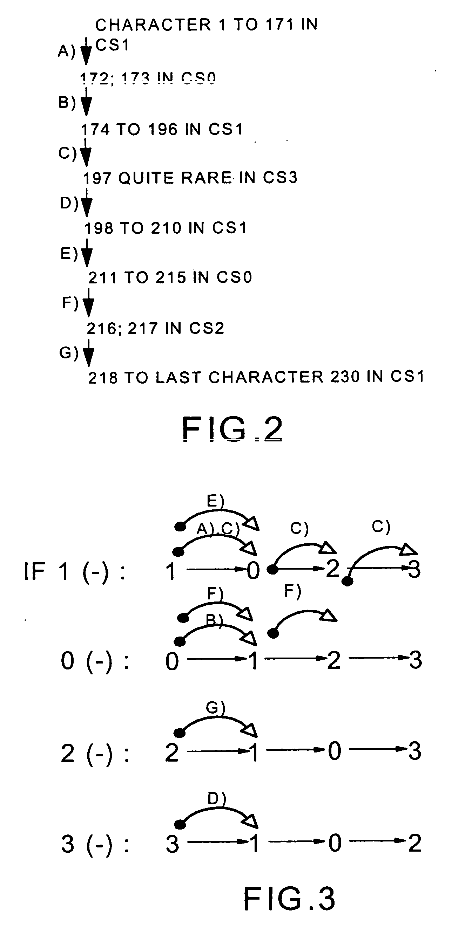

With reference now to **fig. 2 and 3** a preferred embodiment of the inventional method will be described in more detail in an exemplary code conversion from Japanese UNICODE to mixed Japanese EUC sub-codepages.

Prior to start the code conversion an already existing estimation for said Japanese EUC sub-codepages is used estimating that the sub-codepages in this special case are organized such that codeset 1 comprises nearly 70% of all occurring source characters, whereas codeset 0 comprises about 29%, codeset 2 comprises about 0,6% and codeset 3 comprises about 0,4% of the total of occurring characters. Said codeset probability distribution is depicted in fig. 1 as well in so far as the most freqiently used codeset 14 is depicted in front and the most rarely used one is depicted as last set 17 of the 'stack' of codesets. The above-mentioned priority sequence is thus:
codeset 1, codeset 0, codeset 2, codeset 3.

In fig. 2 a rough illustration in an arbitrarily chosen example is depicted showing for each of a plurality of 230 source characters in which of a plurality of 4 sub-codepages each character may be found.

A total of 230 source characters are to be converted in a single exemplary conversion process. It should be understood that the number of 230 is chosen quite small in order to improve clarity of the process.

The total of 230 source characters are thus comprised of the input set symbolically represented with reference sign 10 in fig. 1. The new numerical code required to be issued by the inventional method is stored in the four sub-codepages 14, 15, 16, 17, see fig. 1 right side as follows:
characters 1 to 171 in codeset 1,
characters 172, 173 in codeset 0,
characters 174 to 196 in codeset 1, again,
character 197 which is a quite rarely used one, is located in codeset 3,
characters 198 to 210 in codeset 1, again,
characters 211 to 215 are stored in codeset 0,
characters 216, 217 in codeset 2, which are quite rarely used, as well, and
characters 218 to 230 in codeset 1.

The conversion scheme serially processes the above-mentioned source characters. In a preferred way to apply the inventional method, hardware instructions can be used, which process a plurality of characters at a time. An example for this is the IBM OS/390 hardware instruction 'Translate Two to One', abbreviated as TRTO for converting a string comprised of 2-byte characters into an output butter comprising 1-byte characters. Said hardware instruction takes arguments as follows:
the string to be converted,
the target buffer into which the converted string can be stored, a character indicating that a particular input character can not be converted,
a conversion table which is addressed with the character to be converted and where the converted character is stored at the thus addressed location.

For the sake of clarity, however, and in order to concentrate on the real core of the present invention the above described input character sequence is submitted to a single-character conversion process, i.e., a process which is treating each character separately.

According to a preferred feature of the present embodiment a set of processing rules are established which is derived from the above-mentioned priority sequence. Said processing rules are as follows:
1. access the highest priority codeset first;
2. when a particular character can not be found in the highest priority codeset then continue with the codeset having the next lower priority and so on;
3. In case a character has not been found in a codeset: access the codeset having the highest priority which has not yet been accessed for this character.

Applying these rules yields the scheme given in fig. 3.

**Fig. 3** comprises for rows. The first row reflects the sequence of sub-codepages to be accessed subsequently if a particular character can not be found when starting with an access in sub-codepage 1, i.e., the sub-codepage having the highest priority. Thus, when a character can not be found in sub-codepage 1 sub-codepage 0 will be accessed for searching the current character. If said current character is found in sub-codepage 0 the process continues in said sub-codepage with the next character to be converted. For this next character the second row will be applied for search. Otherwise, if the above-mentioned current character can not be found in sub-codepage 0, then sub-codepage 2 will be accessed for further search. Then a corresponding scheme will be followed for sub-codepage 2:
If the current character is found in sub-codepage 2 the associated numerical code, i.e. the converted code will be issued and the next character will be searched according to the third row depicted in **fig. 3.** Otherwise, i.e. if the current character is not found in sub-codepage 2 the last sub-codepage 3 will be accessed for search. Then the character will be found and the search continues with the fourth row depicted in fig. 3.

As can be appreciated from the above description according to said embodiment of the present invention the search always continues in the particular sub-codepage in which the last character was successfully detected.

With special reference to the second, third or fourth row the highest priority sub-codepage, here codepage 1 depicted with reference sign 14 in fig. 1, is always accessed for the next character to be converted when in the respective current sub-codepage said next character could not be found.

With particular reference to the character string illustrated in fig. 2 the way of processing i.e. of accessing the different sub-codepages will be described now in more detail. In both figures **2, and 3** arrows are depicted denoted from A) to G) indicating respective access changes from one codeset to another codeset:
The search begins with an access to sub-codepage 1 because this is the highest priority one. Thus, character 1 is found and its numerical code is converted by outputting the numerical code stored in sub-codepage 1. Then the conversion process takes the second character as input and the same procedure is repeated because the second character is stored in sub-codepage 1, as well. The same applies in continuation until character number 172 is reached.

Said current character 172 can not be found in sub-codepage 1. Thus, as reveals from arrow a) the sub-codepage 0 will be accessed next because it is the sub-codepage having the next highest priority. Incidentally, character 172 is found in sub-codepage 0. Thus, its numerical code will be issued as described above. Sub-codepage 0 will now be continued to be applied for character 173. Incidentally, as reveals from fig. 2 it is stored as well in sub-codepage 0. Then, character 174 is processed. This time this character is not found in codeset 0. Thus, the second row in fig. 3 applies. As reveals from arrow b) codeset 1 is re-accessed because the probability to find the character is the highest when searching in this codeset.

Incidentally, as reveals again from fig. 2 said character 174 is found in codeset 1 again. Thus, after issue the first row applies again. Characters 175 to 196 are processed as described above without changing the codeset.

Then, character 197 which is a quite rarely used character is not found in codeset 1. Thus, as reveals from arrow c) in fig. 3 codeset 0 is accessed and searched. Then, as it is not found therein codeset 2 is accessed and searched, and as it is not found therein, finally codeset 3 is accessed. Herein, character 197 is found and its numerical code is issued. Then the search continues in codeset 3.

Character 198 is not found in codeset 3. Thus, the fourth row depicted in fig. 3 applies and as reveals from arrow d) codeset 1 is accessed next. In here the search is successful for character 198 until character 211 can not be found. Thus, the first row applies again. As reveals from arrow E) codeset 0 is accessed next. In codeset 0 characters 211 to 215 are found.

Character 216, however, can not be found and, thus, the second row applies and codeset 1 is re-accessed for search. As, however, it is not found therein, codeset 2 is accessed, as reveals from arrow F). Here, it is found and after issue the next character 217 is processed successfully from codeset 2, as well.

Then, character 218 is processed and, as it is not found in codeset 2, codeset 1 is re-accessed as it reveals from the third row in fig. 3. Character 218 and all subsequent characters remaining in the input set of characters to be converted are found in codeset 1 again. Thus, they are processed as described above and after the last character 230 has been converted, the conversion process stops. Thus, all source character codes have been converted succcessfully.

In the foregoing specification the invention has been described with reference to a specific exemplary embodiment thereof. It will, however, be evident that various modifications and changes may be made thereto without departing from the scope of the invention as set forth in the appended claims. The specification and drawings are accordingly to be regarded as illustrative rather than in a restrictive sense.

For example, the search can be continued differently after a hit in a rarely used codeset: Alternatively, the search can be continued automatically with the highest priority codeset without trying to find it in the same rarely used codeset. This situation occurs after character 197 has been processed in the above given detailed description. Statistically seen, it can be achieved a further small performance gain.

The present invention can be realized in hardware, software, or a combination of hardware and software. A code conversion tool according to the present invention can be realized in a centralized fashion in one computer system, or in a distributed fashion where different elements are spread across several interconnected computer systems. Any kind of computer system or other apparatus adapted for carrying out the methods described herein is suited. A typical combination of hardware and software could be a general purpose computer system with a computer program that, when being loaded and executed, controls the computer system such that it carries out the methods described herein.

The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following
a) conversion to another language, code or notation;
b) reproduction in a different material form.

## Claims

1. A method for converting a source string comprising a plurality of source characters into a target string, the source string being encoded according to Unicode code pages and the target string being desired to be encoded according to mixed code pages comprising a plurality of sub-codepages (14, 15, 16, 17), **characterized by** the steps of:
associating a predetermined processing priority with each sub-codepage (14, 15, 16, 17) yielding a processing priority sequence,
converting the characters strictly according to said priority sequence.

2. The method according to claim 1 in which the priority sequence reflects the probability of finding a source character in one of said subcodepages (14, 15, 16, 17).

3. The method according to claim 1 further comprising the step of
accessing the sub-codepage having the highest priority which has not yet been accessed for a character if said character has not been found in the current subcodepage.

4. The method according to claim 1 in which more than one character is processed by a single hardware instruction.

5. The method according to claim 1 in which said priority sequence is dynamically changed from a standard to an individual setting before running the code conversion.

6. A computer system having installed program means for performing the steps of a method according to one of the preceding claims 1 to 5.

7. The computer system according to the preceding claim arranged for being used as an Internet server having installed program means for performing the steps of a method according to one of the preceding claims 1 to 5.

8. A chip means comprising hardware circuits implementing at least parts of the steps of a method according to one of the preceding claims 1 to 5.

9. A device comprising the chip according to the preceding claim.

10. A computer program for execution in a data processing system comprising computer program code portions for performing respective steps of the method according to anyone of the claims 1 to 5.

11. The computer program according to the preceding claim being a Browser program.

12. A computer program product stored on a computer usable medium comprising computer readable program means for causing a computer to perform the method of anyone of the claims 1 to 5.

## Patentansprüche

1. Methode zur Konvertierung einer Quellzeichenfolge, die eine Vielzahl von Quellzeichen umfasst, in eine Zielzeichenfolge, wobei die Quellzeichenfolge nach UNICODE-Codepages codiert ist und die Zielzeichenfolge nach gemischten Codepages codiert sein soll, die eine Vielzahl von Teil-Codepages (14, 15, 16, 17) umfassen, **gekennzeichnet durch** die folgenden Schritte:
- Zuordnen einer festgelegten Verarbeitungspriorität zu jeder Teil-Codepage (14, 15, 16, 17), woraus sich eine Verarbeitungsprioritätenreihenfolge ergibt,
- Konvertieren der Zeichen streng nach dieser Prioritätenreihenfolge.

2. Methode nach Anspruch 1, bei der die Prioritätenreihenfolge die Wahrscheinlichkeit des Findens eines Quellzeichens in einer der Teil-Codepages (14, 15, 16, 17) widerspiegelt.

3. Methode nach Anspruch 1, die ferner folgenden Schritt umfasst:
- Zugreifen auf die Teil-Codepage mit der höchsten Priorität, auf die für ein Zeichen noch nicht zugegriffen wurde, wenn dieses Zeichen in der aktuellen Teil-Codepage nicht gefunden wurde.

4. Methode nach Anspruch 1, bei der mehr als ein Zeichen von einem einzigen Hardware-Befehlssatz verarbeitet wird.

5. Methode nach Anspruch 1, bei der die Prioritätenreihenfolge vor der Ausführung der Codekonvertierung dynamisch von einer Standard- zu einer individuellen Einstellung geändert wird.

6. Computersystem, auf dem Programmmittel zur Durchführung der Schritte einer Methode nach einem der vorhergehenden Ansprüche 1 bis 5 installiert sind.

7. Computersystem nach dem vorhergehenden Anspruch, das zur Verwendung als ein Internet-Server dient, auf dem Programmmittel zur Durchführung der Schritte einer Methode nach einem der vorhergehenden Ansprüche 1 bis 5 installiert sind.

8. Chipmittel, die Hardware-Schaltkreise umfassen, welche mindestens teilweise die Schritte einer Methode nach einem der vorhergehenden Ansprüche 1 bis 5 implementieren.

9. Gerät, das den Chip nach dem vorhergehenden Anspruch umfasst.

10. Computerprogramm zur Ausführung in einem Datenverarbeitungssystem, das Computerprogrammcodeabschnitte zur Durchführung entsprechender Schritte der Methode nach einem der Ansprüche 1 bis 5 umfasst.

11. Computerprogramm nach dem vorhergehenden Anspruch, bei dem es sich um ein Browser-Programm handelt.

12. Computerprogrammprodukt, das auf einem computergeeigneten Medium gespeichert ist und computerlesbare Programmmittel umfassen, die einen Computer dazu veranlassen, die Methode nach einem der Ansprüche 1 bis 5 durchzuführen.

## Revendications

1. Procédé destiné à convertir une chaîne source comprenant une pluralité de caractères sources en une chaîne cible, la chaîne source étant codée conformément aux pages de code Unicode et la chaîne cible étant souhaitée être codée conformément à des pages de code mixtes comprenant une pluralité de sous-codepages (14, 15, 16, 17), **caractérisé par** les étapes consistant à :
associer une priorité de traitement prédéterminée à chaque sous-codepage (14, 15, 16, 17) en produisant une séquence de priorités de traitement,
convertir les caractères strictement en fonction de ladite séquence de priorités.

2. Procédé selon la revendication 1, dans lequel la séquence de priorités reflète la probabilité de trouver un caractère source dans l'une desdites sous-codepages (14, 15, 16, 17).

3. Procédé selon la revendication 1, comprenant en outre l'étape consistant à
accéder à la sous-codepage présentant la priorité la plus élevée qui n'a pas encore fait l'objet d'un accès pour un caractère si ledit caractère n'a pas été trouvé dans la sous-codepage actuelle.

4. Procédé selon la revendication 1, dans lequel plus d'un caractère est traité par une seule instruction matérielle.

5. Procédé selon la revendication 1, dans lequel ladite séquence de priorités est modifiée de manière dynamique d'un paramétrage standard à un paramétrage individuel avant d'exécuter la conversion de code.

6. Système informatique comportant un moyen de programme installé destiné à exécuter les étapes d'un procédé conforme à l'une des revendications précédentes 1 à 5.

7. Système informatique selon la revendication précédente, conçu pour être utilisé en tant que serveur du système Internet comportant un moyen de programme installé destiné à exécuter les étapes d'un procédé conforme à l'une des revendications précédentes 1 à 5.

8. Moyen de puce comprenant des circuits matériels mettant en oeuvre au moins des parties des étapes d'un procédé conforme à l'une des revendications précédentes 1 à 5.

9. Dispositif comprenant la puce selon la revendication précédente.

10. Programme informatique pour une exécution dans un système de traitement de données comprenant des parties de code de programme informatique destinées à exécuter des étapes respectives du procédé selon l'une quelconque des revendications 1 à 5.

11. Programme informatique selon la revendication précédente qui est un programme de navigateur.

12. Produit de programme informatique mémorisé sur un support utilisable par un ordinateur, comprenant un moyen de programme lisible par un ordinateur destiné à amener un ordinateur à exécuter le procédé selon l'une quelconque des revendications 1 à 5.
